(19) Europäisches Patentamt
European Patent Office
Office européen des brevets

(11) Numéro de publication: **0 133 071**
**B1**

# (12) FASCICULE DE BREVET EUROPEEN

(45) Date de publication du fascicule du brevet: **30.03.88**

(51) Int. Cl.⁴: **C 09 C 1/42**, C 01 B 33/26, B 01 J 13/00

(21) Numéro de dépôt: **84401361.5**

(22) Date de dépôt: **26.06.84**

(54) **Argiles organophiles modifiées.**

(30) Priorité: **27.06.83 FR 8310579**

(43) Date de publication de la demande: **13.02.85 Bulletin 85/7**

(45) Mention de la délivrance du brevet: **30.03.88 Bulletin 88/13**

(84) Etats contractants désignés: **BE DE FR GB IT LU NL**

(56) Documents cités: **US - A - 4 292 035**

(73) Titulaire: **CECA S.A., 11 avenue Morane Saulnier, F-78141 Velizy Villacoublay (FR)**

(72) Inventeur: **Callens, Roeland, Les Varets 31-K, F-14600 Honfleur (FR)**
Inventeur: **Petris, Louis Georges, 38, La Gaillarderie, F-78590 Noisy le Roi (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

**Description**

La présente invention se rapporte à des argiles organophiles modifiées et à leur procédé de préparation. Elle concerne plus précisément des composés, susceptibles de modifier le comportement rhéologique des systèmes fluides non aqueux et d'être mis en œuvre de façon aisée grâce à une grande aptitude à la dispersion dans ces milieux non aqueux sous taux de cisaillement faible ou nul.

Il est connu depuis longtemps que le remplacement des cations minéraux échangeables des argiles du type smectite, qu'elles soient d'origine naturelle comme les bentonites, hectorites, montmorillonites, nontronites, attapulgites, illites, zéolithes, terres à foulon, etc..., ou d'origine synthétique comme les permutites, par des cations organiques, conduit à des produits organophiles qui possèdent à des degrés divers, la propriété de gonfler dans des liquides organiques très variés (par exemple hydrocarbures aliphatiques ou aromatiques, nitrobenzène, phosphates de crésyle, polysiloxanes, etc...).

De très nombreux produits ont été décrits comme cations susceptibles d'engendrer des argiles organophiles; parmi eux les alkylamines, à chaîne alkyle contenant plus de 10 atomes de carbone, sont explicitement revendiquées dès 1946 par Ernst A. Hauser (US-A 2 531 440 National Lead Company).

Les smectites à forte capacité d'échanges de cations (0,6 à 1,2 milliéquivalent par gramme d'argile), et les sels de di-(suif-alkyl)-diméthyl-ammonium, ou de di-(suif-alkyl)-méthyl benzyl ammonium se sont très rapidement imposés comme composants des argiles organogonflantes, et l'emploi de telles organoargiles s'est généralisé dans des industries très diverses (lubrifiants, encres, peintures et vernis, produits pour forages pétroliers, gels de polyesters...).

Cependant, l'aptitude au gonflement de ces argiles organophiles est limitée.

Tout d'abord, un optimum de qualité du produit se trouve, et de façon assez pointue, pour un rapport cation/argile correspondant pratiquement à la saturation par le cation organique de la totalité des sites échangeables de l'argile. A tout dépassement de l'équilibre stoechiométrique correspond une diminution très sensible des propriétés gonflantes ou gélifiantes du produit (voir par exemple l'article de J.W. Jordan, Organophic Bentonites Swelling in Organic Liquids, dans The Journal of Physical and Colloid Chemistry, vol 53 1949).

D'autre part, les compositions organiques à modifier rhéologiquement par les argiles organophiles, ne développent généralement leurs propriétés finales qu'après avoir été soumises à un très fort cisaillement, par exemple par passage dans un disperseur. Malgré tout, ces gélifiants ne développent pas la thixotropie optimale dans les hydrocarbures, qu'ils soient aliphatiques ou aromatiques, à moins d'être mis en présence des substances polaires à bas poids moléculaires, dites adjuvantes de solvation (ou de gonflement, de dispersion ou de gélification) tels que les alcools légers, l'acétone, les esters, le plus fréquent étant le méthanol aqueux. L'emploi de ces adjuvants polaires n'est pas sans inconvénient au niveau de l'utilisation, modifiant d'autant plus les propriétés des formulations qui les contiennent, que les quantités utiles sont loin d'être négligeables (couramment 30 à 50%, et souvent plus, du poids de la bentonite organophile).

Une amélioration sensible consiste en la modification de l'argile organophile par intercalation. On entend par là une insertion supplémentaire de molécules organiques non ioniquement activées entre les feuillets de l'argile, la fixation se faisant par un processus mal connu, mais en l'occurence différent de l'échange de cation. L'exemple en est donné par la demande de brevet EUA 207.542 du 17.11.80 qui découvre l'intercalation de complexes anioniques-cationiques, tel que le complexe acide stéarique/benzyldiméthyl-(suif-alkyl)-ammonium.

La demanderesse a trouvé de façon inattendue que des argiles organophiles modifiées, gonflant dans les liquides organiques sans apport d'adjuvant de solvation, et sous des taux de cisaillement faibles ou nuls, pouvaient être obtenus par combinaison de smectites, de sel de (suif-alkyl) – ou de di-(suif-alkyl)-(méthyl ou benzyl) ammonium en quantité quasi-stoechiométrique, et de composés tensioactifs organiques azotés mono- ou polyhydroxylés, tels que les alkylamines oxyalkylées et les sels d'ammonium quaternaire oxyalkylé à longues chaînes hydrocarbonées.

Ce résultat est d'autant plus surprenant que ces produits sont, du fait de leur caractère ionisable ou ionisé, cationiquement échangeables, et que contrairement à ce que l'on obtient avec les cations organiques précédemment utilisés, l'excès de cations ou de base organique par rapport au composé quasi-stoechiométrique smectite – ammonium quaternaire, se traduit par une augmentation de la dispersibilité et de pouvoir gonflant, et ce, en l'absence de solvant polaire.

Selon l'invention, les composés tensioactifs azotés du type alkylamines oxyalkylées sont représentés par la formule générale:

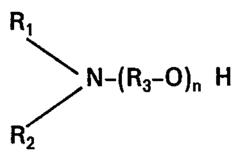

où $R_1$ est une chaîne hydrocarbonée, linéaire ou ramifiée, saturée ou insaturée, comprenant de 10 à 24 atomes de carbone;
où $R_3$ est une chaîne hydrocarbonée linéaire ou ramifiée comprenant de 2 à 6 atomes de carbone;
où $R_2$ est l'hydrogène, ou $R_1$ ou $(R_3-O)_nH$;
où n est un nombre compris entre 1 et 50, préférentiellement compris entre 1 et 20.

On connaît de nombreux modes de préparation des produits de cette catégorie, les plus industriellement rencontré étant l'oxyalkylation de mono- ou de dialkylamines grasses.

Selon l'invention, les composés tensioactifs azotés du type sels d'ammonium quaternaire oxyalkylé, sont représentés par la formule générale:

$$\begin{array}{l} \quad R_1 \\ \quad | \\ R_2-N^{+}-(R_3-O)_n H\ A^{-} \\ \quad | \\ \quad R_4 \end{array}$$

ou $R_1$ est une chaîne hydrocarbonée, linéaire ou ramifiée, saturée ou insaturée, comprenant de 10 à 24 atomes de carbone;
où $R_3$ est une chaîne hydrocarbonée linéaire ou ramifiée comprenant de 2 à 6 atomes de carbone;
où $R_2$ et $R_4$ peuvent être ensemble ou indépendamment $R_1$ ou $(R_3\text{-}O)_nH$ ou une chaîne hydrocarbonée contenant 1 à 6 atomes de carbone, ou un reste benzyle;
où n est un nombre compris entre 1 et 50, préférentiellement compris entre 1 et 20. On connaît de nombreux modes de préparation des produits de cette catégorie, le plus fréquemment rencontré dans l'industrie étant la quaternisation, par un réactif de quaternisation approprié, des amines oxyalkylées décrites plus haut.

On peut préparer les argile organophiles selon l'invention selon un processus qui comprend les opérations suivantes:
- Réalisation sous agitation d'une barbotine aqueuse à 25/35 g de matière sèche par litre, à partir de la smectite préalablement épurée, l'opération étant réalisée entre 20 et 80°C, préférentiellement entre 60 et 70°C.
- Introduction, dans un ordre indifférent du sel d'ammonium quaternaire et du tensioactif azoté hydroxylé; les quantités de réactif sont telles que le sel d'ammonium quaternaire puisse saturer de 90 à 110% de la capacité d'échange de la smectite, et préférentiellement de 95 à 105% de cette capacité, et que le tensioactif azoté hydroxylé représente de 10 à 35% de la smectite.
- Poursuite de l'agitation et maintien de la température aux valeurs choisies ci-dessus.
- Filtration sous dépression.
- Lavage du gâteau avec de l'eau à la température choisie ci-dessus.
- Séchage à basse température, de préférence en atmosphère ventilée, pour obtenir un gâteau titrant moins de 2% d'humidité.
- Broyage du produit séché et tamisage à la maille de 80 micromètres.

L'appréciation de la qualité des argiles organophiles modifiées selon l'invention se fait au moyen d'essais connus de l'homme de l'art, et que l'on résume brièvement ici.

On disperse l'argile organophile modifiée dans le liquide organique choisi, additionné ou non d'un agent polaire de dispersion, à l'aide d'un matérial dont on peut faire varier à volonté l'énergie de dispersion (par exemple, le disperseur Dispermat de la Société Getzmann).

On mesure alors les valeurs de la viscosité et de la thixotropie des dispersions obtenues.

On apprécie également le comportement des produits selon l'invention par la mesure des volumes de gonflement et de dépôt; le volume de gonflement est le volume apparent de la matière solide qui sédimente lorsque l'on introduit, sans agitation, les argiles organophiles modifiées dans un liquide organique choisi (1 g de produit pour 100 millilitres de liquide).

Le dépôt étant remis en suspension par agitation manuelle, on observe après 24 heures de repos, le volume occupé par les particules solides en suspension, cette mesure constituant le volume de dépôt.

Les exemples ci-après illustrent l'invention.

Exemple 1

On prépare une bentonite organophile modifiée suivant le processus décrit plus haut à partir d'une bentonite sodique naturelle, préalablement épurée par échange sur résine dont la capacité d'échange de cations est de 0,98 à 1 milliéquivalent par gramme.

La barbotine à 30 g/litre de bentonite est portée à 65–70°C, et additionnée sous agitation d'une quantité quasi-stoechiométrique de chlorure de di(suif hydrogéné-alkyl)diméthylammonium, en l'occurence de Noramium M2SH de la société Ceca S.A., à raison de 62% du produit commercial par rapport à la bentonite.

On ajoute ensuite divers tensioactifs suivant l'invention, et on applique la suite du mode opératoire précédemment décrit jusqu'à obtention du produit final sec sous forme pulvérulente.

Les formules présentées dans le tableau cidessus ont été préparées avec grande facilité: précipitation rapide du composé, pas de formation de mousse en cours de réaction, filtration, séchage et broyage final aisés.

Pour simplifier la lecture du tableau, on a décrit les tensioactifs azotés hydroxylés par leur nom commercial selon la société qui les produit:
- Noramox C 11 (Ceca S.A.): monocoprah-alkylamine à 11 molécules d'oxyde d'éthylène;
- Genamin T 080 (Hoechst AG): monosuifalkylamine à 8 molécules d'oxyde d'éthylène;
- Noramox S 9; Noramox S 11 (Ceca S.A.): monosuifalkylamine respectivement à 9 et 11 molécules d'oxyde d'éthylène.
- Noxamium M2SH 15 (Ceca S.A.): Chlorure d'ammonium quaternaire comprenant deux chaînes di-(suif hydrogéné)alkyle, une chaîne méthyle et une chaîne provenant de la condensation de 15 molécules d'oxyde d'éthylène.

Le produit de référence A est la di(suif hydrogéné)-alkyl-diméthylammonium-bentonite, non modifiée.

Tableau des formules précédentes

| Produit | Tensioactif azoté hydroxylé | |
|---|---|---|
| | Nature | Quantité relative à la bentonite |
| Réf. A | Néant | Néant |
| Réf. B | Noramox S 11 | 20% |
| Réf. C | Noramox S 11 | 25% |

| Produit | Tensioactif azoté hydroxylé | |
|---|---|---|
| | Nature | Quantité relative à la bentonite |
| Réf. D | Noramox S 11 | 30% |
| Réf. E | Noramox S 11 | 35% |
| Réf. F | Noramox C 11 | 30% |
| Réf. G | Genamin T 080 | 30% |
| Réf. H | Noxamium M2SH 15 | 30% |
| Réf. I | Noxamium M2SH 15 | 10% |
| | Noramox S 11 | 20% |
| Réf. J | Noxamium M2SH 15 | 20% |
| | Noramox S 11 | 10% |

Exemple 2

On disperse 3% de produits B, C, D, E de l'exemple 1 (bentonites organophiles modifiées par des monosuifalkylamines, éthoxylées à des degrés divers) dans du white-spirit à l'aide d'un Dispermat F1, avec des vitesses de cisaillement, respectivement de 5 et 18 m.s.$^{-1}$ pendant 5 minutes. On contrôle la viscosité du gel obtenu à l'aide du viscosimètre Brookfield RTV, aiguille No 2, vitesse de rotation croissante de 10 à 100 t.min$^{-1}$, à la température de 20°C; on relève la mesure de la viscosité à 50 t.min$^{-1}$.

L'expérience est répétée sur le gel précédent additionné de 50% d'un solvant polaire, constitué d'un mélange méthanol/eau en proportions volumétriques relatives 95/5. La mesure de viscosité est effectuée avec le même appareil, aiguille No 3, vitesse de rotation décroissante de 100 à 10 t.min$^{-1}$; on relève la mesure de la viscosité à 50 t.min.$^{-1}$.

A titre comparatif, on a utilisé le produit A, figurant une bentonite organophile suivant l'art antérieur.

Le tableau ci-dessous reproduit les valeurs de viscosités exprimées en millipascals-secondes (centipoises), obtenues à 50 t.min$^{-1}$.

| Produit | White-spirit seul | | White-spirit et solvant polaire | |
|---|---|---|---|---|
| | Cisaillement | | Cisaillement | |
| | 5 m.s$^{-1}$ | 18 m.s$^{-1}$ | 5 m.s$^{-1}$ | 18 m.s$^{-1}$ |
| Réf. A | inf. à 2 | | 220 | 660 |
| Réf. B | 16 | 40 | 130 | 270 |
| Réf. C | 48 | 112 | 300 | 340 |
| Réf. D | 92 | 265 | 370 | 440 |
| Réf. E | 152 | 304 | 430 | 500 |

Ces résultats montrent la faculté des produits selon l'invention de développer leur produit viscosant dans des solvants aliphatiques avec de faibles vitesses de cisaillement; les produits conservent néanmoins une susceptibilité, par ailleurs utilisable, au cisaillement et aux solvants polaires.

Exemple 3

Les essais décrits dans cet exemple illustrent l'aptitude au gonflement de produits B, F et G de l'exemple 1, et la stabilité des solvants épaissis par ces produits; on apprécie pour cela les volumes de gonflement et de dépôt, les solvants utilisés étant le toluène et le white-spirit à moins de 5% d'aromatiques, tel quel, ou additionné de 1% de méthanol aqueux ou de carbonate de propylène (CP), jouant le rôle de solvant polaire.

Le tableau ci-dessous donne les volumes de gonflement et de dépôt (respectivement indiqués VG et VD) en pour cent apparents du volume total de la suspension, suivant le mode opératoire précédemment décrit.

| Produit | Toluène | | White-spirit | | | | | |
|---|---|---|---|---|---|---|---|---|
| | | | Pur | | + méthanol | | +CP | |
| | VG | VD | VG | VD | VG | VD | VG | VD |
| Réf. A | 37 | 49 | 8 | 11 | 22 | 30 | 28 | 45 |
| Réf. B | 46 | 55 | 33 | 46 | 50 | 65 | 53 | 60 |
| Réf. C | 34 | 81 | 17 | 23 | 36 | 90 | 36 | 80 |
| Réf. D | 21 | 100 | 27 | 65 | 30 | 100 | 35 | 100 |

Cette série de résultats témoigne notamment de l'avantage des produits suivant l'invention dans leur utilisation avec un solvant aliphatique tel que le white-spirit; ces résultats restent encore améliorables par addition d'un adjuvant polaire.

Exemple 4

On a réalisé la formule G de l'exemple 1 en faisant varier l'ordre d'introduction des réactifs organiques dans la barbotine de bentonite.

G1: d'abord le sel d'ammonium quaternaire, plus l'amine de suif éthoxylée.

G2: mélange préalable du sel d'ammonium quaternaire et de l'amine de suif éthoxylée.

G3: d'abord l'amine de suif éthoxylée, puis le sel d'ammonium quaternaire.

Le test de qualité retenu est la mesure des volumes de gonflement et le dépôt dans le volume et le white-spirit additionné de 1% de carbonate de propylène.

| Produit | Toluène | | White-spirit et carbonate de propylène | |
|---|---|---|---|---|
| | VG | VD | VG | VD |
| G1 | 24 | 37 | 32 | 60 |
| G2 | 26 | 37 | 35 | 68 |
| G3 | 23 | 37 | 31 | 60 |

Le comportement des produits selon l'invention résulte bien de leur composition et non pas d'un artifice qulconque de fabrication.

Exemple 5

Dans cet exemple, on donne des résultats d'épaississement de white-spirit avec des bentonites organophiles modifiées avec un tensioactif azoté hydroxylé constitué, selon l'invention, d'un mélange d'alkylamine éthoxylée et chlorure de dialkyl-méthyl-polyéthoxyéthanolammonium (produits I et J de l'exemple 1).

| Produit | Viscosité de gels à 3% de bentonites organophiles modifiées | |
|---|---|---|
| | Cisaillement | |
| | $5 m.s^{-1}$ | $18 m.s^{-1}$ |
| Réf. A | inf. à 2 | inf. à 2 |
| Réf. I | 40 | 135 |
| Réf. J | 24 | 33 |

| Produit | Suspension à 1% de bentonites organophiles modifiées | |
|---|---|---|
| | Volume de gonflement | Volume de dépôt |
| Réf. A | 8 | 11 |
| Réf. I | 30 | 68 |
| Réf. J | 26 | 78 |

Exemple 6

L'exemple décrit une application des produits selon l'invention aux peintures, et plus précisément à la peinture émail. On y montre comment on peut relever efficacement les caractéristiques rhéologiques d'une base de peinture à température ambiante et dans des conditions douces d'agitation. La bonne dispersibilité de l'additif est évidemment très critique dans une peinture émail puisque la présence de grains ou de grumeaux altère le fini de la surface peinte.

Le contrôle du grain se fait suivant la méthode bien connue de mesure de la finesse au cryptomètre Hegman, qui permet d'estimer la taille maximum (en micromètres) des particules solides de la peinture. Le comportement rhéologique est déduit des mesures de viscosité, effectuées comme il est décrit plus haut, à diverses vitesses rotation; on estime la thixotropie grâce au «coefficient rhéologique» $E = \eta_{10}/\eta_{100}$ où $\eta_{10}$ et $H_{100}$ sont les mesures de la viscosité en millipascals-secondes respectivement à 10 et 100 tours par minute. L'essai comparatif porte sur l'amélioration d'une peinture émail du commerce. A 150 grammes de cette peinture, on ajoute, à température ambiante, 500 milligrammes de bentonite organophile en poudre tamisée à 50 microns. L'incorporation se fait sous la seule agitation d'un agitateur rotatif de type Dispermat, muni d'une hélice de 30 millimètres de diamètre et animée d'une vitesse périphérique de 2,5 mètres par seconde.

On compare la peinture de base, la peinture modifiée par une bentonite organophile témoin réf. A de l'exemple 1, et une bentonite organophile modifiée selon l'invention, le produit J de l'exemple 1.

Le premier tableau compare les finesses Hegman en microns obtenues après 6, 12, et 18 minutes d'agitation et après repos de 24 heures.

| Conditions d'agitation | peinture témoin | peinture + réf. A | peinture + réf. J |
|---|---|---|---|
| 6 minutes | - | 50 | 35 |
| 12 minutes | - | 45 | 20 |
| 18 minutes | - | 40 | 8 |
| Repos 24 h | - | 45 | 3 |

Le tableau suivant porte mesures de viscosités en millipascals-secondes à diverses vitesses de rotation effectuées sur préparation agée de 24 heures, et valeurs du coefficient rhéologique.

| Viscosités en mPa · s à | peinture témoin | peinture + réf. A | peinture + réf. J |
|---|---|---|---|
| $10 t.mn^{-1}$ | 2400 | 2520 | 4600 |
| $20 t.mn^{-1}$ | 2400 | 2250 | 4300 |
| $50 t.mn^{-1}$ | 2160 | 1945 | 3520 |
| $100 t.mn^{-1}$ | 1920 | 1656 | 2920 |
| $E = \eta_{10}/\eta_{100}$ | 1250 | 1522 | 1575 |

Ces exemples sont donnés à titre non limitatif et n'affectent pas la généralité de l'invention.

**Revendications**

1. Argiles organophiles modifiées, dispersibles sous faible taux de cisaillement dans les liquides non aqueux, caractérisées en ce qu'elles résultent de la combinaison d'une smectite avec un sel d'ammonium quaternaire du type sel de dialkyldiméthylammonium ou dialkylméthylbenzyl ammonium et un composé tensioactif organique azoté mono- ou polyhydroxylé.

2. Argiles organophiles modifiées, selon la revendication 1, caractérisées en ce que le composé tensioactif organique azoté mono- ou polyhydroxylé est constitué par un produit ou un mélange de produits appartenant au groupe des alkylamines alcoxylées et des sels d'alkylammonium alcoxylé.

3. Argiles organophiles modifiées, selon les revendications 1 et 2, caractérisées en ce que leurs composants tensioactifs du type alkylamines alcoxylées répondant à la formule:

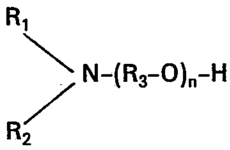

où $R_1$ est une chaîne hydrocarbonée linéaire ou ramifiée, saturée ou insaturée, comprenant de 10 à 24 atomes de carbone, où $R_2$ est l'hydrogène, $R_1$ ou $(R_3-O)_nH$, où $R_3$ est une chaîne hydrocarbonée linéaire ou ramifiée comprenant de 2 à 6 atomes de carbone, où n est un nombre compris entre 1 et 50, préférentiellement compris entre 1 et 20.

4. Argiles organophiles modifiées, selon les revendications 1 et 2, caractérisées en ce que leurs composants tensioactifs du type sel d'alkylammonium alcoxylé répondent à la formule:

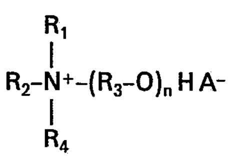

où $R_1$ est une chaîne hydrocarbonée linéaire ou ramifiée, saturée ou insaturée comprenant de 10 à 24 atomes de carbone;
où $R_3$ est une chaîne hydrocarbonée linéaire ou ramifiée comprenant de 2 à 6 atomes de carbone;
où $R_2$ et $R_4$ peuvent être ensemble ou indépendamment $R_1$, $(R_3-O)_nH$, ou une chaîne hydrocarbonée comprenant 1 à 6 atomes de carbone, ou un reste benzyle;
où n est un nombre compris entre 1 et 50, préférentiellement compris entre 1 et 20.

5. Argiles organophiles modifiées, selon les revendications 1 à 4, caractérisées en ce que la quantité du dit tensioactif azoté mono- ou polydroxylé est comprise entre 10 et 35% du poids de la smectite.

6. Argiles organophiles modifiées, selon la revendication 1, caractérisées en ce que le sel d'ammonium quaternaire du type dialkyldiméthylammonium ou dialkylméthylbenzylammonium comprend des chaînes alkyles linéaires ou ramifiées, saturées ou insaturées, contenant de 10 à 24 atomes de carbone.

7. Argiles organophiles modifiées, selon les revendications 1 et 6, caractérisées en ce que la quantité de sel d'ammonium quaternaire du type dialkyldiméthylammonium ou dialkylméthylbenzylammonium représente 90% à 110% de la quantité stoechiométrique nécessaire à la saturation des sites d'échange de cations de la smectite.

8. Procédé d'obtention d'argiles organophiles modifiées selon les revendication 1 à 7, caractérisées en ce qu'il comprend les opérations sucessives suivantes:

a) Réalisation d'une barbotine épurée de smectite de 25 à 35 grammes par litre.
b) Mise en température à 60–70°C, sous agitation, de la barbon.
c) Addition, dans un ordre indifférent du sel d'ammonium quaternaire et du tensioactif azoté hydroxylé.
d) Maintien sous agitation à 60–70°C.
e) Filtration sous dépression.
f) Lavage du gâteau avec de l'eau à 60–70°C.
g) Séchage à basse température jusqu'à obtention d'une teneur en eau inférieure à 2%.
h) Broyage et tamisage à la maille de 80 micromètres.

9. Formulations fluides à base de liquides non aqueux, à propriétés rhéologiques contrôlées, caractérisées en ce qu'elles contiennent au titre d'additifs de contrôle rhéologique, des argiles organophiles modifiées selon la revendication 1.

**Patentansprüche**

1. Modifizierte organophile Tone, die bei Anwendung geringer Scherkräfte in nichtwässrigen Flüssigkeiten dispergierbar sind, dadurch gekennzeichnet, dass sie ein Gemisch aus einem Smectit mit einem quaternären Ammoniumsalz, wie einem Dialkyldimethylammonium- oder Dialkylmethylbenzylammoniumsalz, und einer oberflächenaktiven, mono- oder polyhydroxylierten organischen, Stickstoff enthaltenden Verbindung darstellen.

2. Modifizierte organophile Tone nach Anspruch 1, dadurch gekennzeichnet, dass die oberflächenaktive, mono- oder polyhydroxylierte, organischen Stickstoff enthaltende Verbindung ein Produkt oder ein Gemisch von Produkten darstellt, die zur Gruppe der alkoxylierten Alkylamine und alkoxylierten Alkylammoniumsalze gehören.

3. Modifizierte organophile Tone nach Anspruch 1 und 2, dadurch gekennzeichnet, dass ihre oberflächenaktiven Verbindungen vom Typ alkoxylierter Alkylamine der Formel

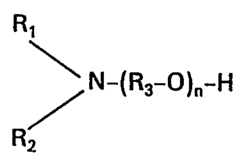

entsprechen, wobei $R_1$ eine unverzweigte oder verzweigte, gesättigte oder ungesättigte Kohlenwasserstoffkette mit 10 bis 24 C-Atomen, $R_2$ Wasserstoff, $R_1$ oder $(R_3-O)_nH$, $R_3$ eine unverzweigte oder verzweigte Kohlenwasserstoffkette mit 2 bis 6 C-Atomen und n eine Zahl zwischen 1 und 50, vorzugsweise zwischen 1 und 20, bedeuten.

4. Modifizierte organophile Tone nach Anspruch 1 und 2, dadurch gekennzeichnet, dass ihre oberflächenaktiven Verbindungen vom Typ Alkoxyalkylammoniumsalz der Formel

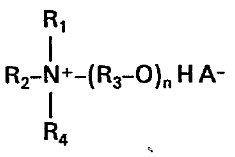

entsprechen, wobei $R_1$ eine unverzweigte oder verzweigte, gesättigte oder ungesättigte Kohlenwasserstoffkette mit 10 bis 24 C-Atomen, $R_3$ eine unverzweigte oder verzweigte Kohlenwasserstoffkette mit 2 bis 6 C-Atomen, $R_2$ und $R_4$ zusammen oder unabhängig voneinander $R_1$, $(R_3\text{-}O)_nH$ oder eine Kohlenwasserstoffkette mit 1 bis 6 C-Atomen oder einen Benzylrest, und n eine Zahl zwischen 1 und 50, vorzugsweise zwischen 1 und 20, bedeuten.

5. Modifizierte organophile Tone nach Anspruch 1 bis 4, dadurch gekennzeichnet, dass die Menge der mono- oder polyhydroxylierten, Stickstoff enthaltenden oberflächenaktiven Verbindung 10 bis 35 Gew.-% des Smectits ausmacht.

6. Modifizierte organophile Tone nach Anspruch 1, dadurch gekennzeichnet, dass das Salz des quaternären Ammoniums vom Typ Dialkyldimethylammonium oder Dialkylmethylbenzylammonium unverzweigte oder verzweigte, gesättigte oder ungesättigte Alkylketten mit 10 bis 24 C-Atomen umfasst.

7. Modifizierte organophile Tone nach Anspruch 1, dadurch gekennzeichnet, dass das Salz des quaternären Ammoniums vom Typ Dialkyldimethylammonium oder Dialkylmethylbenzylammonium 90 bis 110% der für die Sättigung der Kationenaustauschstellen des Smectits erforderlichen stöchiometrischen Menge ausmacht.

8. Verfahren zur Herstellung modifizierter organophiler Tone nach Anspruch 1 bis 7, dadurch gekennzeichnet, dass es die nachfolgenden Schritte umfasst:

a) Bereitstellung eines gereinigten Schlickers aus 25 bis 35 g Smectit pro Liter.
b) Erwärmung des Schlickers unter Rühren auf eine Temperatur von 60 bis 70°C.
c) Zugabe des quaternären Ammoniumsalzes und der Stickstoff enthaltenden, hydroxylierten Verbindung in beliebiger Reihenfolge.
d) Halten der Temperatur bei 60 bis 70°C unter Rühren.
e) Filtration unter Unterdruck.
f) Waschen des Kuchens mit Wasser bei 60 bis 70°C.
g) Trocknung bei niedriger Temperatur bis zur Erzielung eines Wassergehalts unter 2%.
h) Zerkleinerung und Sieben bei einer Maschenweite von 80 µm.

9. Flüssige Gemische auf der Basis von nichtwässrigen Flüssigkeiten mit kontrollierten rheologischen Eigenschaften, dadurch gekennzeichnet, dass sie als Zusätze für die Steuerung der rheologischen Eigenschaften modifizierte organophile Tone nach Anspruch 1 enthalten.

**Claims**

1. Modified organophilic clays, which can be dispersed in non-aqueous liquids with a low shearing force, characterised in that they are formed as a result of the combination of a smectite and a quaternary ammonium salt of the dialkyldimethylammonium or dialkylmethylbenzyl ammonium salt type and a surface-active organic compound which is nitrogenous and mono or poly hydroxylated.

2. Modified organophilic clays, according to claim 1, characterised in that the surface active organic compound which is nitrogenous and mono or poly hydroxylated consists of a product or mixture of products belongig to the group of alcoxylated alkylamines and alcoxylated alkylammonium salts.

3. Modified organophilic clays, according to claims 1 and 2, characterised in that their surface active components of the alcoxylated alkylamine type which correspond to the following formula:

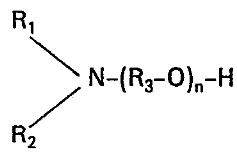

in which $R_1$ is a linear or branched, saturated or unsaturated hydrocarbon chain comprising 10 to 24 carbon atoms, in which $R_2$ is the hydrogen, $R_1$ or $(R_3\text{-}O\text{-})_nH$, in which $R_3$ is a linear or branched hydrocarbon chain comprising 2 to 6 carbon atoms and in which n is a number between 1 and 50, preferably between 1 and 20.

4. Modified organophillic clays according to claims 1 and 2, characterised in that their surface active components of the alcoxylated alkyl ammonium salt type, corespond to the following formula:

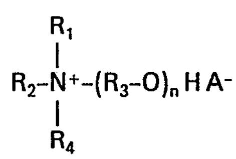

in which $R_1$ is a linear or branched, saturated or unsaturated hydrocarbon chain comprising 10 to 24 carbon atoms;
in which $R_3$ is a linear or branched hydrocarbon chain comprising 2 to 6 carbon atoms;
in which $R_2$ and $R_4$ may together or independently be $R_1$, $(R_3\text{-}O)_nH$, or a hydrocarbon chain comprising 1 to 6 carbon atoms or a benzyl residue; in which n is a number between 1 and 50 and for preference between 1 and 20.

5. Modified organophilic clays, according to claims 1 to 4, characterised in that the quantity of the said surface-active agent which is nitrogenous and mono or poly hydroxylated is between 10 and 35% of the weight of the smectite.

6. Modified organophilic clays, according to claim 1, characterised in that the quaternary ammonium salt of the dialkyldimethylammonium or dialkylmethylbenzylammonium type comprises linear or branched, saturated or unsaturated alkyl chains containing 10 to 24 carbon atoms.

7. Modified clays according to claims 1 and 6, characterised in that the quantity of quaternary ammonium salt of the dialkyldimethylammonium or dialkylmethylbenzyl ammonium type represents 90% to 110% of the stoechiometric quantity required for the saturation of the sites for exchanging the smectite cations.

8. Process for obtaining modified organophilic clays according to claims 1 to 7, characterised in that it comprises the following successive operations:

a) Production of a purified slip of smectite of 25 to 35 grammes per litre.
b) Placing under temperature conditions of 60 to 70°C with agitating of the slip.
c) Addition in any order of the quaternary ammonium salt and the surface-active agent which is nitrogenous and hydroxylated.
d) Holding with agitating at 60–70°C.
e) Filtration under a depression.
f) Washing the cake with water at 60–70°C.
g) Drying at low temperature until a water content of less than 2% is obtained.
h) Crushing and straining with an 80 micrometre mesh.

9. Fluid formulations with a base of non aqueous liquids, with controlled rheological properties characterised in that they contain by way of rheological control additives, modified organophillic clays according to claim 1.